# EUROPEAN PATENT APPLICATION

(11) **EP 2 759 805 A2**
(43) Date of publication of application: **30.07.2014**
(21) Application number: 14150507.3
(22) Date of filing: 08.01.2014
(51) Int. Cl.: G01C 23/00, B64D 45/04

(54) **Method and system for displaying a helicopter terrain intercept point during landing**

(30) Priority: 23.01.2013 US 201313747539
(71) Applicant: Honeywell International Inc., Morristown, NJ 07962-2245 (US)
(72) Inventor: He, Gang, Morristown, NJ New Jersey 07962-2245 (US)
(74) Representative: Houghton, Mark Phillip

(57) **Abstract**

A method and its corresponding system for displaying an intercept point on a synthetic vision display on board a helicopter, wherein the display conforms to the flight path intercepting the terrain when the nose of the helicopter is pitched up during landing. A steep approach during landing may be detected by an evaluation of, for example, attitude of the helicopter, rate of descent, and airspeed.

## Description

### TECHNICAL FIELD

The exemplary embodiments described herein generally relates to helicopter aviation and more particularly to helicopter approaches to a landing.

### BACKGROUND

The approach to landing and landing by a helicopter is probably one of the most challenging tasks a helicopter pilot undertakes during normal operations due to the precision actions required and increased pilot workload. To perform the landing properly, the helicopter typically performs the landing to a landing pad or a runway in a manner quite different from that of fixed wing aircraft.

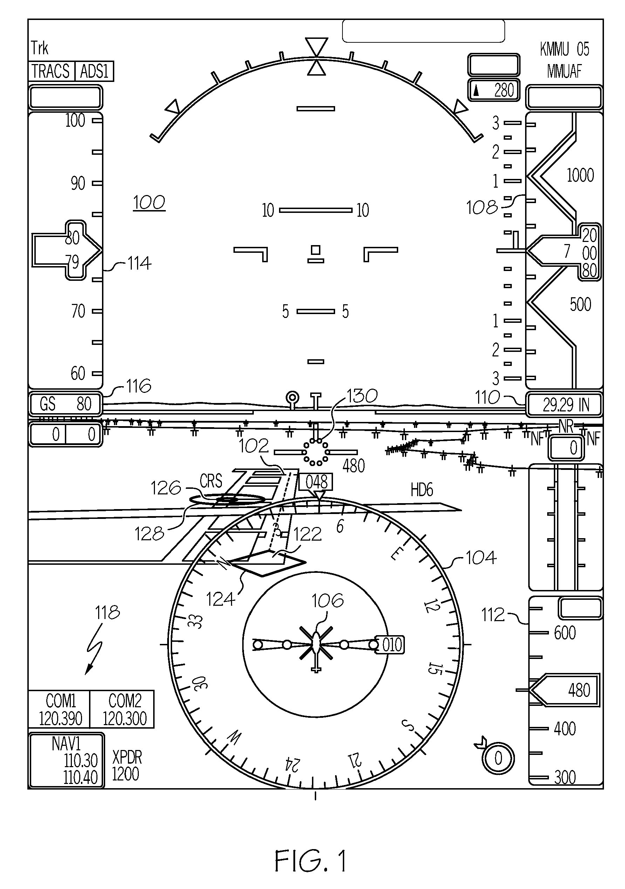

Helicopter flying differs from fixed wing aircraft with significantly more vertical movement and dynamics. During a steep approach into a landing point, the helicopter can be de-accelerating by pitching up while approaching at a much steeper glide slope in comparison to fixed wing aircraft. As such, representing the current flight path direction, for example, as a flight path marker, on a typical synthetic vision system (SVS) display presents more issues in comparison to the fixed wing aircraft. For example, referring to FIG. 1, a known representation 100 displayed of a helicopter approach to landing includes a runway 102, a compass 104, a helicopter icon 106 representing the base helicopter, and various other data including an altimeter 108, a barometric pressure indicator 110, a vertical feet per minute indicator 112, an airspeed indicator 114, a ground speed indicator 116, and various communication channel identifiers 118. Additional data displays (not shown) could also be displayed, and some of those indicators shown, for example, 108, 110, 112, 114, 116, and 118, could be omitted. The intended target for a landing is the threshold 122 of the runway and is identified on the SVS display 100 by a diamond shaped icon 124. In some embodiments, a landing pad 126, separate from the runway 102, may be identified by a circle (or oval) 128.

As the helicopter approaches for a landing, the helicopter nose may be pitched up while maintaining a glide slope that may be quite different from the nose of the helicopter. In a typical fixed wing SVS display, a flight path marker (FPM) is used to precisely depict where the aircraft is pointing or moving conformal to the displayed scene. In a helicopter SVS display, however, as shown in FIG. 1, the flight path marker 130 indicates where the helicopter is "pointing" based on the pitch of the nose of the helicopter, even though the helicopter is descending to a point in the vicinity of the runway. Some known systems will "ghost" the flight path marker 130 when the helicopter nose is pitched up and the flight path marker display will collide with other symbologies at the bottom portion of the display if staying conformal to the point of aircraft travel, in order to let the pilot know the location of the flight path marker 130 is quite different from the intended landing point. "Ghosting" could include, for example, modifying the format, for example, by dimming, using dots, or changing color. This could happen even when the helicopter pitch is not noticeably up, but when the helicopter is flying at a steeper glide path, for example, during the auto-rotation. When the helicopter is flying in weather, or by a brown out (dust caused by the rotors), the display must be used for navigational guidance; however, there is no indication of where the helicopter is actually going.

As a SVS display can be effective with reasonable compressions in order to ensure that the display can be effectively used for precise vertical controls and for scene information and threat displays, methods to effectively display the flight path information relative to the approach target (aim point) is an essential feature for a helicopter SVS primary flight display system.

Accordingly, it is desirable to provide a display system and method for displaying a helicopter's direction of travel during landing. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A display system and method provide visual guidance for landing a helicopter.

A first exemplary embodiment includes ascertaining flight parameters of the helicopter, the flight parameters including a flight path; determining an intercept point of the flight path with terrain; and displaying the intercept point.

A second exemplary embodiment includes determining a flight path of the helicopter; determining the height of the helicopter above terrain; displaying first symbology including an helicopter intercept point designating where the flight path intercepts terrain; and displaying second symbology including an intended point for landing the helicopter.

A third exemplary embodiment includes display system comprising a display; a database; an avionics system; a processor coupled to the display, database, and avionics system, the processor configured to ascertain flight parameters of the helicopter, the flight parameters including a flight path; determine the height of the helicopter above a terrain; determine an intercept point of the flight path with terrain; and display the intercept point, an icon representing the helicopter, and an icon representing an intended spot for the helicopter landing.

### BRIEF DESCRIPTION OF THE DRAWINGS

The present invention will hereinafter be described in conjunction with the following drawing figures, wherein like numerals denote like elements, and
FIG. 1 is a known simulated image of a landing environment;
FIG. 2 is a block diagram of a vehicle display system for generating images in accordance with exemplary embodiments;
FIG. 3 is a simulated image of a landing environment generated in accordance with an exemplary embodiment; and
FIG. 4 is a flow chart of a method in accordance with the exemplary embodiment.

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), vector processor, stream processor, specialized graphical processor used for general computations (GPGPU), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The word "exemplary" is used exclusively herein to mean "serving as an example, instance, or illustration." Any embodiment described herein as "exemplary" is not necessarily to be construed as preferred or advantageous over other embodiments. Any of the above devices are exemplary, non-limiting examples of a computer readable storage medium.

The steps of a method or algorithm described in connection with the embodiments disclosed herein may be embodied directly in hardware, in a software module executed by a processor, or in a combination of the two. A software module may reside in RAM memory, video memory (VRAM, DRAM), video card memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Any of the above devices are exemplary, non-limiting examples of a computer readable storage medium.

For the sake of brevity, conventional techniques related to graphics and image processing, navigation, flight planning, helicopter controls, helicopter data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

The following detailed description is merely exemplary in nature and is not intended to limit application and uses. Furthermore, there is no intention to be bound by any theory presented in the preceding background or the following detailed description.

A system and method displays an intercept point on a synthetic vision display (SVS) that conforms to the glide path intercepting the terrain when the nose of the helicopter is pitched up during landing. A steep approach may be detected during landing by an evaluation of, for example, attitude of the helicopter, rate of descent, and airspeed. Additional information such as altitude or trend can also be represented along with the conformal intercept point (on-terrain or on-target FPM). The intercept point symbol may fade-in and out depending upon the primary flight path marker display status.

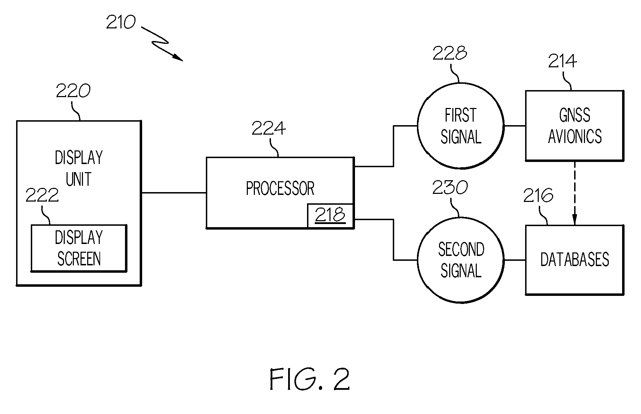

FIG. 2 is a simplified functional block diagram illustrating a display system 210 for displaying images to a pilot of a helicopter landing environment. System 210 includes multiple components each of which may be configured for mounting to a helicopter. In some embodiments, system 210 may be a self-contained system such that each of the components described below are contained in a single housing and are dedicated exclusively to serving the functions of system 210, while in other embodiments, the various components described below may be standalone components or they may be components that are used as part of other systems and which are configured to be used as a shared resource between such other systems and system 210.

In the embodiment illustrated in FIG. 2, system 210 includes Global Navigation Satellite System (GNSS) and avionics sensors 214, databases 216, a display unit 220, a display screen 222, and a processor 224 including memory 218. The databases 216 include a synthetic vision system (SVS) and a terrain and runway database. In equivalent embodiments, system 210 may include either additional or fewer components.

In some embodiments, the system 210 may operate fully or partially integrated into an enhanced vision system (not shown), or a combined vision system (not shown) when the enhanced vision system is used together with the SVS, terrain database, and the runway database.

When used, the databases 216 include a symbol database, where synthetic symbols assigned to various airport features, for example, terrain, are stored. In some embodiments this can be stored just in the memory 218 of the processor 224. In other embodiments, an external database might be used. Typically, the databases 216 would include, for example, a navigation database where runway locations would be stored, and a runway database which may include, for example, information about runway heading and width. In accordance with the exemplary embodiments described herein, symbology is stored providing an intercept point of the helicopter's flight path with the terrain.

The memory 218 may be realized as RAM memory, flash memory, EPROM memory, EEPROM memory, registers, a hard disk, a removable disk, a CD-ROM, or any other form of storage medium known in the art. In this regard, the memory 218 can be coupled to the processor 224 such that the processor 224 can be read information from, and write information to, the memory 218. In the alternative, the memory 218 may be integral to the processor 224. As an example, the processor 224 and the memory 218 may reside in an ASIC. In practice, a functional or logical module/component of the display system 210 might be realized using program code that is maintained in the memory 218. Moreover, the memory 218 can be used to store data utilized to support the operation of the display system 210, as will become apparent from the following description.

The display system 210 of the exemplary embodiment includes a position determining unit 214 that is configured to determine the position of the helicopter with respect to the surface of the earth. Such a position determining unit may include, for example but not limited to, a GNSS system or an inertial navigation system. The position determining unit 214 further includes avionics configured to receive course, speed, rate of descent, and other inputs relating to the helicopter's heading, altitude and attitude and is provided to the processor 224 as a first signal 228. Geographic position data (high integrity) may be determined by a combination of a GPS (with or without wide area augmentation system) and an inertial reference system (not shown).

The display system 210 uses the databases 216 to generate a three-dimensional image of the topographical environment of the approach to an airport (referred to hereinafter as "synthetic image") and generate a second signal 230 carrying the image and to provide the second signal 230 to processor 224. The databases 216 may include data relating to the topography environment, which may represent either or both landscape and/or man-made structures located along the helicopter's flight path. In some embodiments, the databases 216 may contain such data for an entire geographical region such as a state, a country or continent. The databases may also contain airport specific data such as position, orientation of taxiways, buildings and obstructions with an airport environment, normal or often used air-taxi route, control towers, etc.

In some embodiments, the databases 216 may include a dedicated processor, microprocessor, or other circuitry that is configured to take the information pertaining to the position, attitude, altitude and heading of the helicopter and to utilize the information available in the database to generate the second signal 230 that may be utilized by processor 224 to render a three-dimensional image of the topographical environment for a runway as well as its surrounding environment to which the helicopter is approaching. In other embodiments, the databases 216 may not include a dedicated processor, microprocessor or other circuitry. In such embodiments, the second signal 230 would include the unprocessed sensor information and location data which could then be utilized by processor 224 to render a three dimensional image. In either event, the databases 216 is configured to provide second signal 230 to processor 224.

In accordance with the exemplary embodiments, the databases 216 stores approach objects for the desired runway for the approach, as well as a plurality of other approach objects for each of a plurality of runways for which the helicopter may perform an approach for landing. Approach objects are symbology added to the display. For example, the approach objects may be two or three dimensional objects that provide a graphic image.

The display 220 is configured to provide the enhanced images to the operator. In accordance with an exemplary embodiment, the display 220 may be implemented using any one of numerous known displays suitable for rendering textual, graphic, and/or iconic information in a format viewable by the operator. Non-limiting examples of such displays include various cathode ray tube (CRT) displays, and various flat panel displays such as various types of LCD (liquid crystal display) and TFT (thin film transistor) displays. The display 220 additionally may be implemented as a panel mounted display, a HUD (head-up display) projection, or any one of numerous known technologies. It is additionally noted that the display 220 may be configured as any one of numerous types of helicopter flight deck displays. For example, it may be configured as a multi-function display, a horizontal situation indicator, or a vertical situation indicator. In the depicted embodiment, however, the display 220 is configured as a primary flight display (PFD).

Additionally, display unit 220 includes a display screen 222 that is operatively connected to display unit 220. Display screen 222 is configured to be controlled by display unit 220 and may be used to display any type of image including, but not limited to, graphics and text. In some embodiments, display unit 220 may include multiple display screens 222 and/or system 210 may include multiple display units 220.

Processor 224 may be any type of computer, computer system, microprocessor, collection of logic devices, or any other analog or digital circuitry that is configured to calculate, and/or to perform algorithms, and/or to execute software applications, and/or to execute sub-routines, and/or to be loaded with and to execute any type of computer program. Processor 224 may comprise a single processor or a plurality of processors acting in concert. In some embodiments, processor 224 may be dedicated for use exclusively with system 210 while in other embodiments processor 224 may be shared with other systems on board the helicopter. In still other embodiments, processor 224 may be integrated into any of the other components of system 210.

Processor 224 is communicatively coupled to the GNSS/avionics sensors 214 and databases 216, and is operatively coupled to display unit 220. Such communicative and operative connections may be effected through the use of any suitable means of transmission, including both wired and wireless connections. For example, each component may be physically connected to processor 224 via a coaxial cable or via any other type of wired connection effective to convey electronic signals. In other embodiments, each component may be communicatively connected to processor 224 across a bus or other similar communication corridor. Examples of suitable wireless connections include, but are not limited to, a Bluetooth connection, a Wi-Fi connection, an infrared connection, OneWireless™ connection, or the like. The OneWireless™ connection has been developed by Honeywell International, Inc., the Assignee of this document.

Being communicatively and/or operatively coupled with the GNSS/avionics sensors 214, databases 216, and display unit 220 provide processor 224 with a pathway for the receipt and transmission of signals, commands, instructions, and interrogations to and from each of the other components. Processor 224 is configured (i.e., loaded with and being capable of executing suitable computer code, software and/or applications) to interact with and to coordinate with each of the other components of system 210 for the purpose of overlaying images corresponding to the second signal 230. For example, in the illustrated embodiment, the processor 224 is configured to receive a second signal 230 from the databases 216 and to send a command to the display unit 220 instructing the display unit 220 to display portions of a corresponding image generated from database or symbols, on a display screen 222. The processor 224 may also be configured to receive a first signal 228 from the helicopter's GNSS/Avionics system 214 to aid displaying data in an iconic format.

In operation, the processor 220 is configured to process data obtained from the GNSS and avionics 214 of flight status data for the host helicopter. In this regard, the sources of flight status data generate, measure, and/or provide different types of data related to the operational status of the host helicopter, the environment in which the host helicopter is operating, flight parameters, and the like. In practice, the sources of flight status data may be realized using line replaceable units (LRUs), transducers, accelerometers, instruments, sensors, and other well known devices. The data provided by the sources of flight status data may include, for example and without limitation: airspeed data; groundspeed data; altitude data; attitude data, including pitch data and roll data; yaw data; geographic position data (high integrity), such as a combination of GPS (wide area augmentation system) and inertial reference system data; time/date information; heading information; weather information; flight path data; track data; radar altitude data; geometric altitude data; wind speed data; and wind direction data.

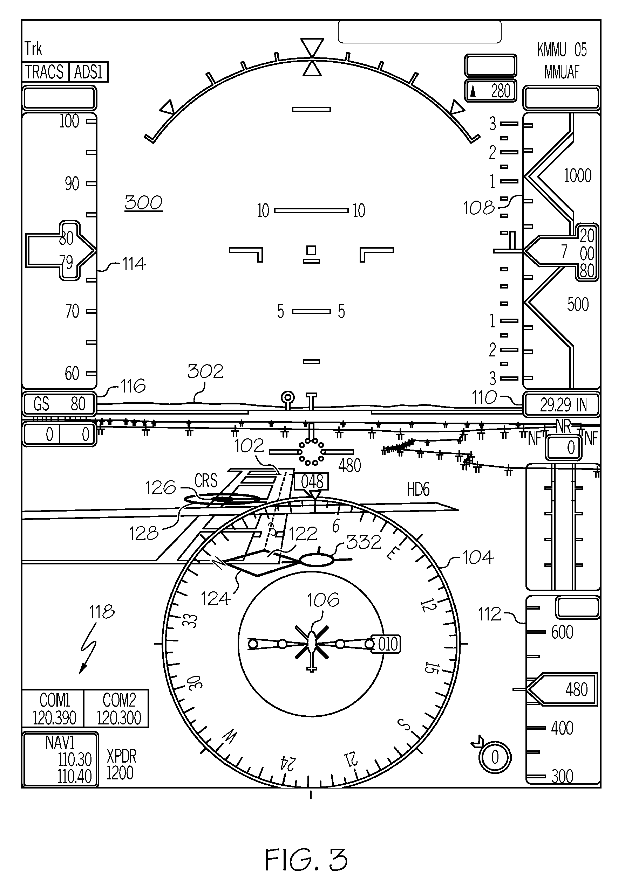

Referring to FIG. 3, textual, graphical, and/or iconic information rendered by the display unit 220, in response to appropriate display commands from the processor 224 is depicted ahead of the aircraft, preferably as a three-dimensional perspective view. It is seen that the display unit 220 renders a view similar to that of FIG. 1 including the runway 102, the compass 104, the helicopter icon 106 representing the base helicopter, and various other data including the altimeter 108, the barometric pressure indicator 110, the vertical feet per minute indicator 112, the airspeed indicator 114, the ground speed indicator 116, and various communication channel identifiers 118. Additional data displays (not shown) could also be displayed, and some of those indicators, for example, 108, 110, 112, 114, 116, and 118, shown could be omitted. The intended target 124 for a landing is the threshold 122 of the runway 102 is identified on the SVS display 300 by a diamond shaped icon. In some embodiments, a landing pad 126, separate from the runway 102, may be identified by a circle (or oval) 128.

A helicopter icon 106 is representative of the current heading direction relative to the specific runway 102 on which the helicopter is to land. The desired helicopter direction is determined, for example, by the processor 124 using data from the navigation database 116 and the avionics 114. It will be appreciated, however, that the desired helicopter direction may be determined by one or more other systems or subsystems, and from data or signals supplied from any one of numerous other systems or subsystems within, or external to, the helicopter. Regardless of the particular manner in which the desired helicopter direction is determined, the processor 124 supplies appropriate display commands to cause the display unit 120 to render the helicopter icon 106.

The flight path marker 130 is typically a circle with horizontal lines (representing wings) extending on both sides therefrom, a vertical line (representing a rudder) extending upwards therefrom, and indicates where the plane is "aimed" during normal flight.

In accordance with the exemplary embodiment, as the helicopter is performing a landing, when the nose of the helicopter is high, an intercept point 332 is displayed indicating where the descent path intersects the terrain. The intercept point 332 is determined by considering flight parameters including, for example, terrain height and helicopter ground speed, rate of descent, and altitude.

During this high nose, steep rate of descent, the intercept point 332 indicating where aircraft is actually headed is quite different from the ghosted flight path marker 130. The pilot may compare the location of the intercept point 332 with the intended target 124 for landing and adjust the approach of the helicopter.

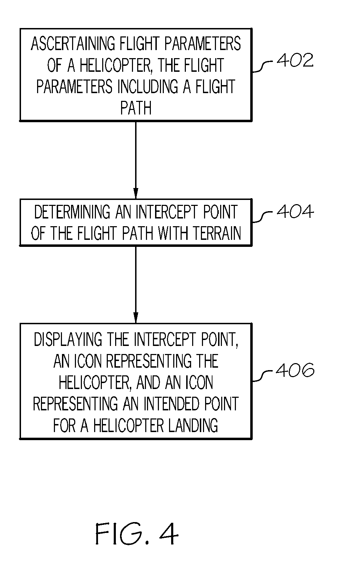

FIG. 4 is a flow chart that illustrates an exemplary embodiment of a display process 400 suitable for use with a flight deck display system such as the display system 110. Process 400 represents one implementation of a method for displaying helicopter traffic information on an onboard display element of a host helicopter. The various tasks performed in connection with process 400 may be performed by software, hardware, firmware, or any combination thereof. For illustrative purposes, the following description of process 400 may refer to elements mentioned above in connection with FIG. 4. In practice, portions of process 400 may be performed by different elements of the described system, e.g., a processor, a display element, or a data communication component. It should be appreciated that process 400 may include any number of additional or alternative tasks, the tasks shown in FIG. 4 need not be performed in the illustrated order, and process 400 may be incorporated into a more comprehensive procedure or process having additional functionality not described in detail herein. Moreover, one or more of the tasks shown in FIG. 4 could be omitted from an embodiment of the process 400 as long as the intended overall functionality remains intact.

In accordance with an exemplary embodiment, and referring to FIG. 4, flight parameters including a flight path and rate of descent of the helicopter are ascertained 402. An intercept point of the flight path and terrain is determined 404 and the intercept point, an icon representing the helicopter, and an icon representing an intended point for the helicopter landing are displayed 406. The intercept point 332 is specifically shown when flight path marker symbology can not be allowed to enter and collide with other PFD symbology. and is different from an airplane aim point or touch down point (not shown) that conventionally is on the runway 102, typically at or some distance down the runway from the threshold point. The helicopter aim point 124 may be adjacent the approach end of the runway 102 and may be of any format, but preferably of a format specific to helicopter operations. Optionally, symbology 128 may highlight a landing pad 126 for the helicopter 102.

The intercept point and FPM overlap when the FPM can be displayed conformal to the scene without interfering with other symbology group. At this moment, the intercept point display will be faded out. When the FPM must be ghosted, the intercept point in the form of, for example, a flight path marker projected onto the terrain area, is faded in and the FPM is faded out. Since this intercept point is projected onto terrain and is displayed as a background scene object resembling a perspective view FPM, it will not interfere or collide with the primary overlay symbology group while proving a clear indication of where aircraft is moving at the moment.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method of providing visual guidance for landing a helicopter, comprising:
ascertaining flight parameters of the helicopter, the flight parameters including a flight path;
determining an intercept point of the flight path with terrain; and
displaying the intercept point.

2. The method of claim 1 further comprising:
displaying a flight path marker associated with level flight of the helicopter in a first format; and
displaying the intercept point in a second format.

3. The method of claim 2 wherein displaying the flight path marker comprises:
displaying in a subdued manner.

4. The method of claim 2 wherein displaying the intercept point comprises:
displaying the intercept point in a subdued manner.

5. The method of claim 1 further comprising:
displaying primary symbology; and
displaying the intercept point so as not to interfere with the primary symbology.

6. The method of claim 1 wherein displaying the intercept point comprises:
displaying an icon representing the helicopter.

7. A display system comprising:
a display;
a database;
an avionics system;
a processor coupled to the display, database, and avionics system, the processor configured to:
ascertain flight parameters of the helicopter, the flight parameters including a flight path;
determine the height of the helicopter above a terrain;
determine an intercept point of the flight path with terrain; and
display the intercept point, an icon representing the helicopter, and an icon representing an intended spot for the helicopter landing.

8. The display system of claim 7 wherein the processor is further configured to:
display the aim point and the intercept point in a format unique to helicopter operations.

9. The display system of claim 7 wherein the processor is further configured to:
display a flight path marker associated with level flight of the helicopter in a first format; and
display the intercept point in a second format.

10. The display system of claim 7 wherein the processor is further configured to:
display the flight path marker in a subdued manner.

11. The display system of claim 7 wherein the processor is further configured to:
display the intercept point in a subdued manner.

12. The display system of claim 7 wherein the processor is further configured to:
display primary symbology; and
display the intercept point so as not to interfere with the primary symbology.

13. The display system of claim 7 wherein the processor is further configured to:
display an icon representing the helicopter.
